Europäisches Patentamt

European Patent Office

Office européen des brevets

(11) Publication number: **0 396 278 A2**

## EUROPEAN PATENT APPLICATION

(21) Application number: **90304178.8**

(22) Date of filing: **19.04.90**

(51) Int. Cl.⁵: **H01M 10/46, H02J 7/34**

(30) Priority: **04.05.89 GB 8910258**

(43) Date of publication of application:
**07.11.90 Bulletin 90/45**

(84) Designated Contracting States:
**AT BE CH DE DK ES FR GR IT LI LU NL SE**

(71) Applicant: **INTERSOLAR LIMITED**
**Unit Two, Cock Lane**
**High Wycombe, Buckinghamshire HP13**
**7DE(GB)**

(72) Inventor: **Wolfe, Phillip Rowland**
**Old Bakehouse, Elm Road**
**Penn, Bucks(GB)**
Inventor: **Callaghan, John Kevin**
**179 Aylesbury Road**
**Wendover, Bucks(GB)**
Inventor: **Carter, Geoffrey**
**35 Clapton Approach**
**Wooburn green, Bucks(GB)**

(74) Representative: **Jukes, Herbert Lewis**
**Swann, Elt & Company 31 Beaumont Street**
**Oxford OX1 2NP(GB)**

(54) Photovoltaic charge storage device.

(57) A charge storage device, characterised by:
housing means (2) constituting or adapted to constitute a housing for receiving radiation;
at least one photovoltaic means (5) disposed relative to said housing means so as to respond to said received radiation and thereby generate electrical charge; and
at least one charge storage means (8) for being at least partly charged by said electrical charge. The device may comprise at least one orientation means (3).

## PHOTOVOLTAIC CHARGE STORAGE DEVICE

Electrically charged batteries or cells are known sources of electrical charge. The charge may be generated by "consumable" chemistry" as is known e.g. for a non-rechargeable zinc cell. The charge may be generated by "cyclic chemistry"as is known e. g. for a rechargeable nickel based cell for instance a nickel-cadium cell. Many standard sizes are known for electrically charged batteries or cells, e.g. the "D", "PP3", or "PP9" batteries. Electrically charged batteries or cells are examples of charge storage devices.

It has been found in accordance with the present invention that a charge storage device may comprise at least one photovoltaic device for providing charge to be stored by the charge storage device, this device being capable of being embodied as a battery or cell corresponding to a known standard size for an electrically charged battery or cell.

According to the present invention, a charge storage device comprises:
housing means constituting or adapted to constitute a housing for receiving radiation;
at least one photovoltaic means disposed relative to said housing means so as respond to said received radiation and thereby generate electrical charge; and at least one charge storage means for being at least partly charged by said electrical charge.

The charge storage device may be embodied in any suitable manner. For example, this device may be in form of "D", "PP3", "PP9", or other known standard size of battery. The device may be adapted to be self regulating. The device may be a voltage source in the range substantially 1.2 to substantially 12 volts.

One example of housing means constituting a housing for receiving radiation is a casing of a battery or of a cell. One example of housing means adapted to constitute a housing comprises a flexible barrier that may be flexed to form at least a portion of the periphery of the charge storage device, e.g. a wrapper for being disposed relative to the interior of the charge storage device, for instance a wrapper that will wrap around at least one charge storage means. The housing means may have any suitable radiation transmission property-(s), e.g. the housing means itself may be at least partly transparent to the radiation; the housing means may comprise at least one window means at least partly transparent to the radiation. The housing means or window means may comprise at least one radiation processor means, e.g. selected from: filter means, lens means, reflector means, etc. Radiation processor means may be provided independently of the housing means and/or be part of the housing means.

The at least one photovoltaic means may be disposed in any suitable manner(s) relative to the housing means, e.g. at least one photovoltaic means may be supported by an inner face or outer face of the housing means, or be comprised within material of the housing means. The exterior or interior of a casing for a battery or cell may have at least one photovoltaic means. At least one photovoltaic means may be distinct from or constitute housing means, e.g. a said wrapper for at least one charge storage means or for content(s) of the charge storage device. In general,at least one photovoltaic means may be at least partly flexible and/or at least partly rigid. At least one photovoltaic means may be responsive to visible and/or other radiation, e.g. be responsive to indoors light such that one embodiment of the charge storage device is a battery or cell, chargeable by indoors light. Preferably, at least one photovoltaic means is responsive to radiation in the intensity range substantially 50 to substantially 20,000 lux, and/or has e.g. an efficiency of at least substantially 2.5% for radiation receptor surface of that photovoltaic means. The at least one photovoltaic means may be an array of photovoltaic members. A photovoltaic means may comprise at least one photovoltaic material, e.g. amorphous silicon. In general, it is contemplated that photovoltaic materials may be used in any physical state, e.g. liquid or solid. Photovoltaic materials may be crystalline or non-crystalline, etc.; and may comprise inorganic and/or organic material(s). One method of providing at least one photovoltaic means utilising amorphous silicon comprises:
providing a substrate; printing electrical contact(s) onto the substrate; depositing at least one electrode onto the substrate; cutting the resultant electrode(s) to give electrode sites; depositing (e.g by glow discharge decomposition of silane(s)) amorphous silicon onto the electrode sites; cutting the deposited amorphous silicon to provide amorphous silicon sites; providing at least one rear electrode onto the amorphous silicon sites; cutting the at least one rear electrode; and encapsulating the resultant substrate, which thereby contains a plurality of photovoltaic members in any suitable predetermined disposition. The initial substrate will be chosen according to the required embodiment of the charge storage device, e.g. relative to the manner in which the housing means is embodied. Any initially deposited electrode may comprise tin oxide. Any rear electrode may comprise aluminium. However, any suitable materials may be utilising in making the at least one photovoltaic means. It will be appreciated that a photovoltaic means may be a thin film device, comprising photovoltaic material in a total thickness in the range substantially 1 to substantially 10 (e.g. in substantially 2 to substantially 8) microns.

The at least one charge storage means may be appropriate to at least one kind of use. Some examples of various charge storage means are: capacitors and rechargeable nickel based cells.

A charge storage device of the present invention may further comprise other component(s). For example, the device may comprise at least one electronic control means for control thereof, e.g. electronic control means comprising at least one diode for resisting flow of charge from at least one charge storage means back to at least one photovoltaic means. It will be appreciated that the device may comprise at least one logic means for enabling the device to act in accordance with the logic of the at least one logic means, which may comprise at least one integrated circuit having suitable programming. At least one logic means may be a component of at least one said electronic control means, and/or be a component distinct from at least one said electronic control means.

A charge storage device of the present invention may be adapted to be orientated relative to at least one source of radiation when the device is to be at least partly charged by that radiation. In general, the charge storage device may comprise at least one orientation means for providing said orientating. Preferably, at least one orientation means is in a predetermined geometrical/optical relationship with at least one said lens means, so as to provide a predetermined efficiency of charging of the charge storage device. Preferably, the housing means comprises at least one said orientation means, e.g. in the form of at least one abutment provided on the exterior of a said casing for a battery or cell. Said abutment may be a flat provided on the exterior of a said casing; such a flat may be disposed relative to a said window, such that when the casing's flat is placed on a substantially horizontal surface, at least one window means will have a predetermined angle corresponding to an angle of elevation of the sun or other source of radiation (which may be an electric light or a building's window, etc.).

In the accompanying drawings, which are by way of example of the present invention:

Fig. 1 shows a "D" size battery.

Fig. 2 is a cross section of Fig. 1.

Fig. 3 shows a "D" size battery having the presence of multiple nickel based rechargeable cells similar to a single such cell in Fig. 2.

Fig. 4 shows an alternative battery.

Fig. 5 shows a further alternative battery.

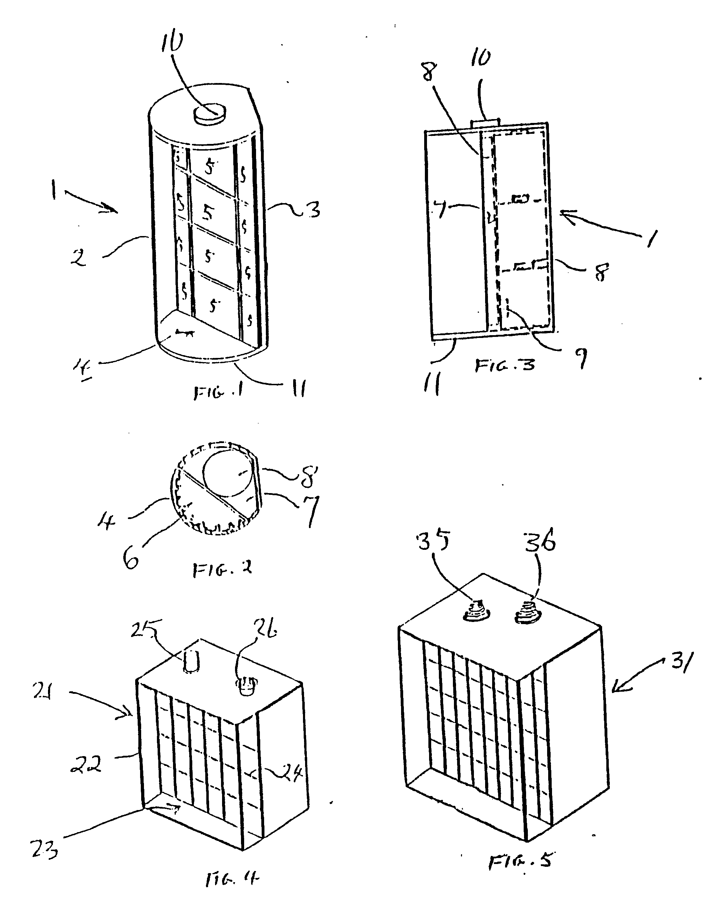

In Fig. 1, a "D" size battery 1 has a casing 2 made of any suitable materials(s), e.g. metal and/or plastics. Casing 2 has a flat abutment 3 for orientating. the battery 1 relative to a source of radiation (not shown). Casing 2 has an arcuate window 4 through which the radiation may pass into battery 1 so as to be incident upon an array of photovoltaic elements 5 each comprising amorphous silicon, e.g. in the form of a layer substantially 5 microns thick. The arrayed elements 5 are responsive to radiation in an intensity range substantially 50 lux upwards, and have an efficiency of at least 2.5%. Window 4 may be adapted to act as a lens for delivering radiation to the photovoltaic elements, e.g. window 4 may have lens profiling 6 provided on its inner surface (Fig. 2). In Fig. 2 or Fig. 3, behind the photovoltaic elements 5 is a storage chamber 7 having nickel-based rechargeable cell(s) 8 chargeable by photovoltaic elements 5. Diode(s)9 (Fig.3) may be provided in circuitry connecting cell(s) 8 to the photovoltaic elements 5, such that diode(s)9 prevent cell(s) 8 discharging backwards to the photovoltaic elements 5. The battery 1 has a button upper terminal 10 and a lower terminal 11 (constituted by the bottom of a metal casing 2, for example), thereby enabling utilisation of the battery 1.

In Fig. 4, there is a boxlike battery 21 having casing 22 containing a planar window 23 through which radiation can pass inwards to a planar photovoltaic array 24 within the casing. Although not shown,Fig.4 contains nickel-based rechargeable cell(s) 8 and may contain a diode 9 in a manner similar to the "D" size battery 1 of Figs. 1 to 3. Battery 21 has terminals 25, 26.

Fig. 5 shows a boxlike battery 31 similar to the battery 21 of Fig. 4, except that battery 31 has terminals 35, 36.

The photovoltaic batteries shown in the accompanying drawings can be modified according to the description given above before the first reference to the drawings. In general the present invention includes equivalents and modifications arising from all the disclosures of the present application. In general, charge storage devices of the present invention may be suitable for use indoors or outdoors. Furthermore, any cell 8 may be embodied in any suitable manner, i.e. any cell 8 need not be a nickel-based cell, provided that it is suitably chargeable. Windows 4 and 24 can be embodied in any suitable manner(s) for serving as lenses, e.g. window 4 or 24 may have any suitable lens configuration, which may or may not include lens profiling as part of such configuration. e.g. as lens profiling 6 (Fig. 2).

When the charge storage device is self regulating, the device may have an equilibrium state or mode whereby at least one photovoltaic means (e.g. a solar array) supplies sufficient current to at least one charge storage means so as to maintain the state of charge of the at least one charge storage means without need of external control device(s). Such an equilibrium state or mode may be termed an autofloat state or mode. In the drawings, an autofloat state or mode is not shown but is an electrical property which subsists within the charge storage devices by virtue of the photovoltaic elements and the charge storage means. Thus, a charge storage device may be termed an autofloat charge storage device, when such a device is adapted to have said equilibrium state or mode. An autofloat charge storage device is one preference according to the present invention. It will therefore be appreciated that the present invention includes a method of providing charge storage, comprising utilising at least one charge storage device of the present invention, e.g. at least one autofloat charge storage device, for any suitable application of such device(s).

## Claims

1. A charge storage device, characterised by:
housing means (2) constituting or adapted to constitute a housing for receiving radiation;
at least one photovoltaic means (5) disposed relative to said housing means so as to respond to said received radiation and thereby generate electrical charge; and
at least one charge storage means (8) for being at least partly charged by said electrical charge.

2. A charge storage device as claimed in claim 1, characterised by said housing means makes said device interchangeable with available batteries or cells, whether primary or rechargeable.

3. A charge storage device as claimed in claim 1 or 2, characterised by said housing means comprises a casing (2) of a battery or of a cell.

4. A charge storage device as claimed in any one of claims 1 to 3, characterised by said housing means comprises at least one window (4) at least partly transparent to the radiation.

5. A charge storage device as claimed in claim 4, characterised by said window is adapted to act as a lens (6).

6. A charge storage device as claimed in any one of claims 1 to 5, characterised by at least one said charge storage means comprises at least one rechargeable cell (8).

7. A charge storage device as claimed in any one of claims 1 to 6, characterised by at least one electronic control means (9) for control thereof.

8. A charge storage device as claimed in any one of claims 1 to 7, characterised by at least one orientation means (3) for orientating said device relative to at least one source of said radiation.

9. A charge storage device as claimed in claim 8, characterised by at least one said orientation means (3) is in a predetermined geometrical and/or optical relationship with said housing means.

10. A charge storage device as claimed in claim 8 or 9, characterised by at least one said orientation means enables a predetermined orientation corresponding to an angle of elevation of a source of said radiation.

11. A charge storage device as claimed in claim 8 or 9, characterised by said housing means comprises at least one window (4) and/or at least one lens (6), wherein said relationship is with at least one said window and/or at least one said window, so as to provide a predetermined efficiency of charging of said charge storage device.

12. A charge storage device as claimed in any one of claims 8 to 11, characterised by said housing means comprises at least one abutment (3) on the exterior of said housing means.

13. A charge storage device as claimed in claim 12, characterised by at least one said abutment comprises a flat (3).

10

1

2

3

4

FIG. 1

11

8

10

7

1

8

9

11

FIG. 3

8'

4

7

6

FIG. 2

25

26

21

22

24

23

FIG. 4

35

36

31

FIG. 5